# EUROPÄISCHE PATENTSCHRIFT

(11) **EP 3 600 807 B1**
(45) Veröffentlichungstag und Bekanntmachung des Hinweises auf die Patenterteilung: **18.05.2022**
(21) Anmeldenummer: 18713225.3
(22) Anmeldetag: 23.03.2018
(51) Int. Cl.: B27L 7/08

(54) **VORRICHTUNG ZUM AUFFANGEN VON SPALTHOLZ**
DEVICE FOR COLLECTING SPLIT WOOD
DISPOSITIF DE COLLECTE DE BOIS FENDU

(30) Priorität: 29.03.2017 DE 202017101806 U
(43) Veröffentlichungstag der Anmeldung: 05.02.2020
(73) Patentinhaber: Schuett, Andreas, 75242 Neuhausen (DE)
(72) Erfinder: Schuett, Andreas, 75242 Neuhausen (DE)
(74) Vertreter: Witte, Weller & Partner Patentanwälte mbB
(86) Internationale Anmeldenummer: PCT/EP2018/057491
(87) Internationale Veröffentlichungsnummer: WO 2018/177948

(56) Entgegenhaltungen:
- EP-A1- 2 942 168
- CZ-U1- 6 499
- DE-A1- 3 202 062
- DE-U1-202004 011 826
- DE-U1-202008 008 617
- DE-U1-202009 004 211
- US-A1- 2017 080 596

## Beschreibung

Die vorliegende Erfindung betrifft eine Vorrichtung zum Auffangen von Spaltholz, gemäß dem Oberbegriff des Anspruchs 1. Eine solche Vorrichtung ist bekannt aus dem Dokument DE 32 02 062 A1.

Verschiedene Lösungen von Vorrichtungen zum Auffangen von Spaltholz sind in DE 32 02 062 A1, DE 20 2009 004211 U1, US 2017/080596 A1, EP 2 942 168 A1 oder DE 20 2008 008617 U1 gezeigt.

Beim Spalten von Holz wird der Holzscheit üblicherweise auf einen sogenannten Hackklotz aufgelegt und dann mit einer Axt gespaltet. Die beiden gespaltenen Holzstücke fallen dabei üblicherweise seitlich vom Hackklotz auf den Boden, sofern keine Auffangvorrichtung verwendet wird,. Die Holz hackende Person muss sich dann nach dem Holz bücken, um dieses zu greifen und wegzulegen. Wird eine Auffangvorrichtung eingesetzt, fällt das Holzstück zurück in den Arbeitsbereich.

Gerade das Bücken nach dem Holz oder das Entfernen des Holzstücks aus dem Arbeitsbereich ist mühsam und beschwerlich..

Vor diesem Hintergrund stellt sich die vorliegende Erfindung die Aufgabe, eine Vorrichtung zu schaffen, die das Hacken bzw. Spalten von Holz erleichtert.

Diese Aufgabe wird von einer Vorrichtung zum Auffangen von Spaltholz gelöst, die die Merkmale des Anspruchs 1 aufweist.

Die Vorrichtung stellt einen sehr flexibel einsetzbaren Fangkorb bereit, der sehr einfach mithilfe des Spannelements an dem Hackklotz, üblicherweise ein Baumstumpf, festgespannt werden kann. Die Stangenelemente, insbesondere die zweiten Längsabschnitte der Stangenelemente, ragen dabei nach oben und bilden eine Art von Auffangzaun um die obere Fläche des Hackklotzes, auf die das zu spaltende Holz aufgelegt wird.

Diese Vorrichtung verhindert, dass das gespaltene Holz seitlich vom Hackklotz auf den Boden fällt.

Die S-förmig gebogene Form der Stangenelemente ermöglicht ferner eine Aufweitung des umschlossenen Bereichs, sodass das gespaltene Holz auf den Verbindungselementen aufliegen kann. Das gespaltene Holz fällt somit nicht wieder zurück in den Arbeitsbereich.

In einer bevorzugten Weiterbildung sind die Stangenelemente -im am Hackklotz befestigen Zustand- gleichmäßig in Umfangsrichtung des Hackklotzes beabstandet, wobei -in Umfangsrichtung- ein Arbeitsbereich frei bleibt.

Der Arbeitsbereich hat folglich eine Öffnung in dem Auffangkorb, sodass ein Spalten des Holzes ungehindert möglich ist.

Bei einer bevorzugten Weiterbildung sind die Verbindungselemente als seilförmige Verbindungselemente, vorzugsweise als Drahtseile, ausgebildet.

Durch die Verwendung von Drahtseilen sind die mehreren Stangenelemente relativ beweglich zueinander, sodass eine sehr flexible Anordnung an einem Hackklotz möglich ist.

Bei einer bevorzugten Weiterbildung weisen die Stangenelemente an ihren zweiten Längsabschnitten Bohrungen zum Durchführen der seilförmigen Verbindungselemente auf. Weiter bevorzugt weisen die ersten Längsabschnitte jeweils ein Aufnahmeelement zum Durchführen des Spannelements auf.

So ist die Verbindung der Verbindungselemente mit den Stangenelementen sehr einfach möglich. Auch die Verbindung des Spannelements mit den Stangenelementen ist mithilfe des Aufnahmeelements sehr einfach möglich.

Bei einer bevorzugten Weiterbildung ist das Spannelement als Spanngurt ausgebildet.

Ein solcher Spanngurt ist ein Standardbauteil, das sehr kostengünstig und einfach in der Handhabung ist.

Bei einer bevorzugten Weiterbildung sind zumindest zwei, vorzugsweise fünf Stangenelemente vorgesehen. Weiter bevorzugt sind zumindest drei, vorzugsweise fünf Verbindungselemente vorgesehen.

Bei einer bevorzugten Weiterbildung ist an den ersten Längsabschnitten der Stangenelemente jeweils zumindest ein Anschlagelement vorgesehen, das -in am Hackklotz befestigtem Zustand- auf einer Arbeitsfläche des Hackklotzes anschlägt, um zu verhindern, dass das jeweilige Stangenelement nach unten rutscht.

Weiter bevorzugt ist an den ersten Längsabschnitten der Stangenelemente zumindest eine Bohrung zur Aufnahme eines Befestigungselements vorgesehen.

Diese Maßnahmen ermöglichen eine sehr stabile Anbringung an einem Hackklotz.

Bei einer bevorzugten Weiterbildung sind die Verbindungselemente von den Stangenelementen lösbar.

Diese Maßnahme hat den Vorteil, dass die Verbindungselemente jederzeit austauschbar sind.

Bei einer bevorzugten Weiterbildung sind die Stangenelemente im Querschnitt T-förmig ausgebildet.

Diese Ausgestaltung hat sich als besonders vorteilhaft herausgestellt, da die Stangenelemente dadurch einerseits sehr stabil sind und andererseits Platz für Bohrungen bereitstellen, durch die die Verbindungselemente und der Spanngurt durchgeführt werden können.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Ausgestaltungen der Erfindung ergeben sich aus der Beschreibung der beiliegenden Zeichnung. Es zeigen:
- Figur 1: eine schematische Darstellung einer erfindungsgemäßen Vorrichtung, die an einem Hackklotz angebracht ist,
- Figur 2: eine Seitenansicht der in Fig. 1 gezeigten erfindungsgemäßen Vorrichtung,
- Figur 3: eine schematische Draufsicht der erfindungsgemäßen Vorrichtung von Fig. 1,
- Figur 4: eine schematische Detailansicht eines Bereichs der erfindungsgemäßen Vorrichtung.

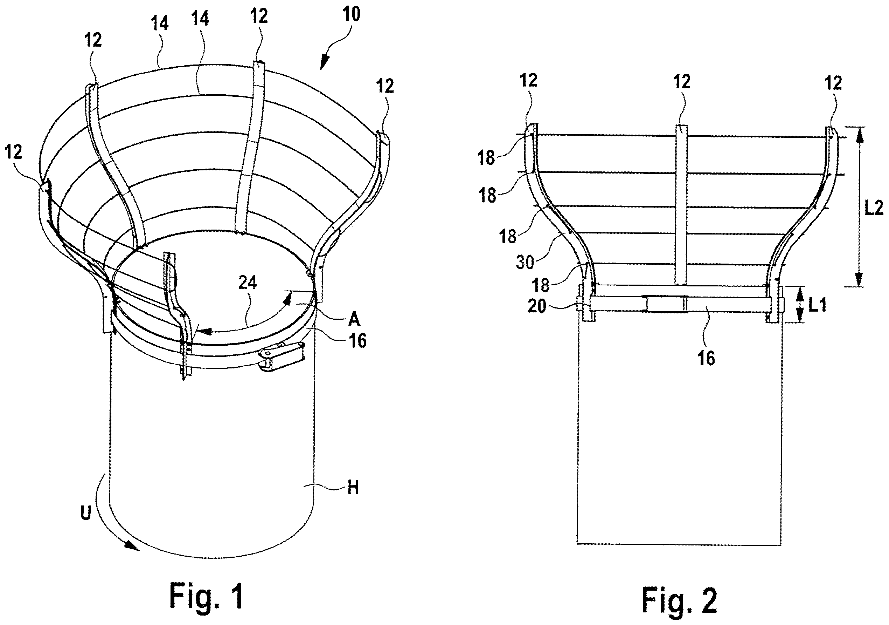

In Fig. 1 ist eine Vorrichtung zum Auffangen von Spaltholz, nachfolgend kurz Auffangvorrichtung genannt, schematisch dargestellt und mit dem Bezugszeichen 10 gekennzeichnet. Die Auffangvorrichtung 10 umfasst mehrere, vorzugsweise fünf stangenförmige Elemente 12, mehrere, vorzugsweise fünf Verbindungselemente 14 sowie einen Spanngurt 16.

Die Stangenelemente 12 sind alle gleich ausgebildet und besitzen, wie in Fig. 2 dargestellt, einen ersten Längsabschnitt L1 und einen sich daran anschließenden Längsabschnitt L2. Während sich der erste Längsabschnitt L1 gerade erstreckt, besitzt der zweite Längsabschnitt L2 eine gebogene Form, sodass das Stangenelement insgesamt etwa S-förmig ausgebildet ist.

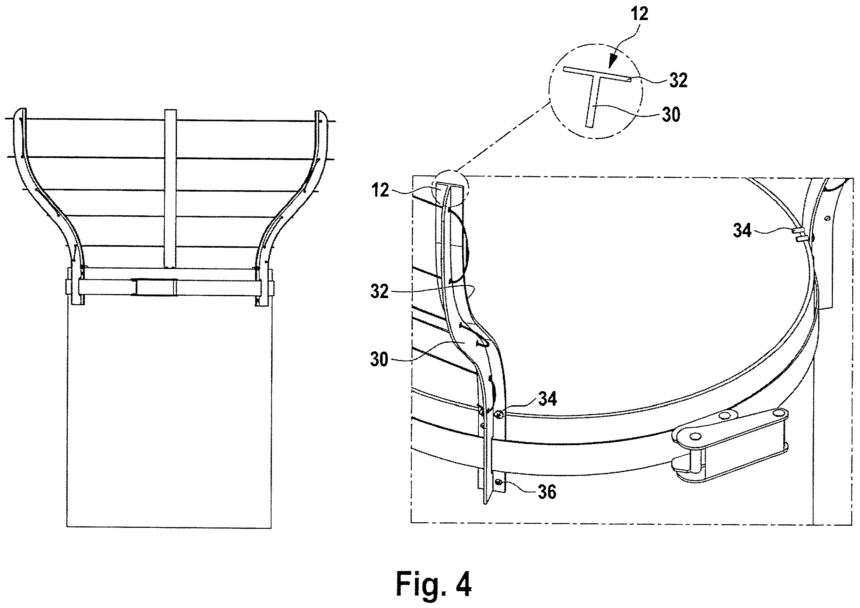

Die Stangenelemente 12 haben -im Querschnitt betrachtet- eine T-Form, wie sich insbesondere aus der Ansicht in Fig. 4 ergibt. Das jeweilige Stangenelement 12 besteht folglich aus einer Basis 30 und einem Flansch 32.

In der Basis 30 sind im zweiten Längsabschnitt L2 Bohrungen 18 vorgesehen, durch die die Verbindungselemente 14, vorzugsweise als Drahtseile ausgebildet, hindurchlaufen können.

Im ersten Längsabschnitt L1 ist in der Basis 30 eine rechteckförmige Öffnung vorgesehen, durch die der Spanngurt 16 hindurchgeführt werden kann.

Wie sich aus Fig. 4 ergibt, sind im ersten Längsabschnitt L1 eines Stangenelements 12 in dessen Flansch 32 Anschlagelemente 34 vorgesehen, die in Form von Bolzen aus dem Flansch 32 hervorragen.

Im ersten Längsabschnitt L1 eines Stangenelements 12 sind zudem Bohrungen 36 vorgesehen, die zur Aufnahme von Befestigungselementen, beispielsweise Nägeln, dienen.

Die Auffangvorrichtung 10 lässt sich an einem Hackklotz H sehr leicht anbringen und mit dem Spanngurt 16 festspannen. Um zu verhindern, dass die einzelnen Stangenelemente 12 beispielsweise zu tief sitzen gegenüber einer Arbeitsfläche A des Hackklotzes H sind die Anschlagelemente 34 vorgesehen, die auf der Arbeitsfläche A aufliegen und somit ein nach unten Rutschen des jeweiligen Stangenelementes verhindern.

Darüber hinaus können die Stangenelemente durch Einbringen von Befestigungselementen, wie Nägeln oder Schrauben, durch die Bohrungen 36 am Hackklotz H befestigt werden.

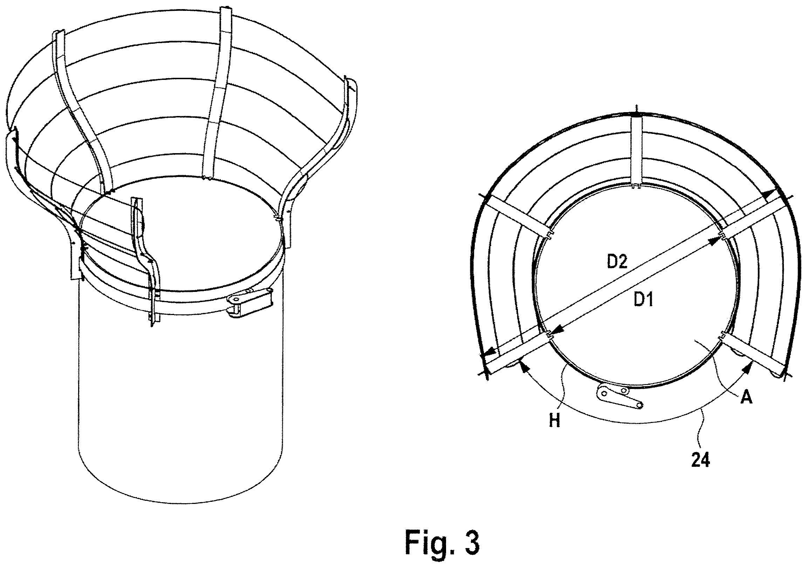

Wie sich aus den Fig. 1 und 3 ergibt, umschließen die Stangenelemente 12 mit den Verbindungselementen 14 einen großen Bereich des Umfangs des Hackklotzes H. Allerdings verbleibt ein offener Umfangsbereich 24, der als Arbeitsöffnung zum Hacken des Holzes dient.

Wie sich aus Fig. 3 nochmals deutlich ergibt, öffnet sich die Auffangvorrichtung nach oben von einem Durchmesser D1, der dem Durchmesser des Hackklotzes entspricht, zu einem deutlich größeren Durchmesser D2. Dieser größere Durchmesser D2 wird durch die S-förmige Ausgestaltung der Stangenelemente erreicht.

Die Stangenelemente sind bevorzugt aus einem Metall gefertigt und bevorzugt gegen Rost geschützt. Die Verbindungselemente sind ebenfalls bevorzugt aus Metall hergestellt.

Die Auffangvorrichtung 10 führt zu einer Erleichterung beim Spalten von Holz, da das gespaltene Holz nicht vom Hackklotz und dessen Arbeitsfläche A zu Boden fällt, sondern vielmehr durch die zaunartigen Verbindungselemente 14 aufgefangen wird. Der Benutzer muss dann das Holz lediglich von der Arbeitsfläche nehmen und sich nicht mehr zum Boden bücken.

Insgesamt führt die erfindungsgemäße Vorrichtung zum Auffangen von Spaltholz zu einer deutlich angenehmeren Arbeitsweise, wobei sie aufgrund der einfachen Konstruktion kostengünstig und sehr flexibel einsetzbar ist.

## Patentansprüche

1. Vorrichtung (10) zum Auffangen von Spaltholz mit
mehreren Stangenelementen (12), die jeweils einen ersten und einen zweiten Längsabschnitt (L1, L2) aufweisen, wobei der zweite Längsabschnitt (L2) gebogen und der erste Längsabschnitt (L1) gerade verläuft,
mehreren Verbindungselementen (14), die die Stangenelemente (12) beweglich miteinander verbinden, wobei die Verbindungselemente mit den zweiten Längsabschnitten (L2) zusammenwirken, und
einem Spannelement, das mit den ersten Längsabschnitten zusammenwirkt und dazu ausgelegt ist, die Stangenelemente (12) mit ihren ersten Längsabschnitten an einem Hackklotz festzuspannen,
**dadurch gekennzeichnet dass** die Stangenelemente S-förmig ausgebildet sind.

2. Vorrichtung nach Anspruch 1, wobei die zweiten Längsabschnitte mit den Verbindungselementen (14) einen Auffangkorb für das Spaltholz bilden.

3. Vorrichtung nach einem der Ansprüche 1 bis 2, wobei die Stangenelemente (12) -im am Hackklotz befestigten Zustand- gleichmäßig in Umfangsrichtung des Hackklotz beabstandet sind, wobei -in Umfangsrichtung- ein Arbeitsbereich frei bleibt.

4. Vorrichtung nach einem der Ansprüche 1 bis 3, wobei die Verbindungselemente (14) als seilförmige Verbindungselemente ausgebildet sind, vorzugsweise als Drahtseile.

5. Vorrichtung nach Anspruch 4, wobei die Stangenelemente an ihren zweiten Längsabschnitten Bohrungen (36) zum Durchführen der seilförmigen Verbindungselemente aufweisen.

6. Vorrichtung nach einem der Ansprüche 1 bis 5, wobei die ersten Längsabschnitte jeweils ein Aufnahmeelement zum Durchführen des Spannelements aufweisen.

7. Vorrichtung nach einem der Ansprüche 1 bis 6, wobei das Spannelement als Spanngurt ausgebildet ist.

8. Vorrichtung nach einem der Ansprüche 1 bis 6, wobei zumindest drei, vorzugsweise fünf Stangenelemente (12) vorgesehen sind.

9. Vorrichtung nach einem der Ansprüche 1 bis 8, wobei zumindest drei, vorzugsweise fünf Verbindungselemente (14) vorgesehen sind.

10. Vorrichtung nach einem der Ansprüche 1 bis 9, wobei an den ersten Längsabschnitten der Stangenelemente (12) jeweils zumindest ein Anschlagelement (34) vorgesehen ist, das -im am Hackklotz befestigten Zustand- auf einer Arbeitsfläche des Hackklotzes anschlägt, um zu verhindern, dass das jeweilige Stangenelement (12) nach unten rutscht.

11. Vorrichtung nach einem der Ansprüche 1 bis 10, wobei an den ersten Längsabschnitten der Stangenelemente (12) zumindest eine Bohrung (36) zur Aufnahme eines Befestigungselements vorgesehen ist.

12. Vorrichtung nach einem der Ansprüche 1 bis 11, wobei die Verbindungselemente von den Stangenelementen (12) lösbar sind.

13. Vorrichtung nach einem der Ansprüche 1 bis 12, wobei die Stangenelemente (12) im Querschnitt T-förmig ausgebildet sind.

## Claims

1. Device (10) for collecting split wood, having
a plurality of bar elements (12) which each have a first and a second longitudinal portion (L1, L2), wherein the second longitudinal portion (L2) extends in a curved manner and the first longitudinal portion (L1) extends in a linear manner,
a plurality of connecting elements (14) which connect the bar elements (12) movably to one another, wherein the connecting elements cooperate with the second longitudinal portions (L2), and
a clamping element which cooperates with the first longitudinal portions and is designed to firmly clamp the bar elements (12) to a chopping block by their first longitudinal portions,
**characterized in that** the bar elements are formed in an S shape.

2. Device according to Claim 1, wherein the second longitudinal portions form a collecting basket for the split wood with the connecting elements (14).

3. Device according to either of Claims 1 and 2, wherein the bar elements (12) - in the state fastened to the chopping block - are spaced apart evenly in the circumferential direction of the chopping block, wherein - in the circumferential direction - a working region is left open.

4. Device according to one of Claims 1 to 3, wherein the connecting elements (14) are in the form of rope-like connecting elements, preferably of wire ropes.

5. Device according to Claim 4, wherein the bar elements have, in their second longitudinal portions, bores (36) for the passage of the rope-like connecting elements.

6. Device according to one of Claims 1 to 5, wherein the first longitudinal portions each have a receiving element for the passage of the clamping element.

7. Device according to one of Claims 1 to 6, wherein the clamping element is in the form of a lashing strap.

8. Device according to one of Claims 1 to 6, wherein at least three, preferably five, bar elements (12) are provided.

9. Device according to one of Claims 1 to 8, wherein at least three, preferably five, connecting elements (14) are provided.

10. Device according to one of Claims 1 to 9, wherein at least one stop element (34) is provided in each case on the first longitudinal portions of the bar elements (12), said stop element - in the state fastened to the chopping block - butting against a working surface of the chopping block in order to prevent the respective bar element (12) from slipping downwards.

11. Device according to one of Claims 1 to 10, wherein at least one bore (36) for receiving a fastening element is provided in the first longitudinal portions of the bar elements (12).

12. Device according to one of Claims 1 to 11, wherein the connecting elements are detachable from the bar elements (12).

13. Device according to one of Claims 1 to 12, wherein the bar elements (12) are formed with a T-shaped cross section.

## Revendications

1. Dispositif (10) pour la collecte de bois fendu comprenant
plusieurs éléments de barre (12), qui présentent chacun une première et une deuxième section longitudinale (L1, L2), la deuxième section longitudinale (L2) s'étendant sous forme courbée et la première section longitudinale (L1) s'étendant sous forme droite, plusieurs éléments de liaison (14), qui relient entre eux de manière mobile les éléments de barre (12), les éléments de liaison coopérant avec les deuxièmes sections longitudinales (L2), et
un élément de serrage, qui coopère avec les premières sections longitudinales et qui est conçu pour serrer les éléments de barre (12) avec leurs premières sections longitudinales sur un bloc de hachage,
**caractérisé en ce que** les éléments de barre sont réalisés en forme de S.

2. Dispositif selon la revendication 1, dans lequel les deuxièmes sections longitudinales forment avec les éléments de liaison (14) un panier de collecte pour le bois fendu.

3. Dispositif selon l'une quelconque des revendications 1 à 2, dans lequel les éléments de barre (12), dans l'état fixé au bloc de hachage, sont régulièrement espacés dans la direction circonférentielle du bloc de hachage, une zone de travail restant libre dans la direction circonférentielle.

4. Dispositif selon l'une quelconque des revendications 1 à 3, dans lequel les éléments de liaison (14) sont réalisés sous forme d'éléments de liaison en forme de câble, de préférence sous forme de câbles métalliques.

5. Dispositif selon la revendication 4, dans lequel les éléments de barre présentent sur leurs deuxièmes sections longitudinales des alésages (36) pour le passage des éléments de liaison en forme de câble.

6. Dispositif selon l'une quelconque des revendications 1 à 5, dans lequel les premières sections longitudinales présentent chacune un élément de réception pour le passage de l'élément de serrage.

7. Dispositif selon l'une quelconque des revendications 1 à 6, dans lequel l'élément de serrage est configuré sous forme de sangle de serrage.

8. Dispositif selon l'une quelconque des revendications 1 à 6, dans lequel au moins trois, de préférence cinq, éléments de barre (12) sont prévus.

9. Dispositif selon l'une quelconque des revendications 1 à 8, dans lequel au moins trois, de préférence cinq, éléments de liaison (14) sont prévus.

10. Dispositif selon l'une quelconque des revendications 1 à 9, dans lequel au moins un élément de butée (34) est prévu respectivement sur les premières sections longitudinales des éléments de de barre (12), qui, dans l'état fixé au bloc de hachage, vient en butée sur une surface de travail du bloc de hachage pour empêcher que l'élément de barre respectif (12) glisse vers le bas.

11. Dispositif selon l'une quelconque des revendications 1 à 10, dans lequel au moins un alésage (36) est prévu sur les premières sections longitudinales des éléments de barre (12) pour la réception d'un élément de fixation.

12. Dispositif selon l'une quelconque des revendications 1 à 11, dans lequel les éléments de liaison sont détachables des éléments de barre (12).

13. Dispositif selon l'une quelconque des revendications 1 à 12, dans lequel les éléments de barre (12) sont configurés en forme de T dans la section transversale.
